## Europäisches Patentamt
## European Patent Office
## Office européen des brevets

(19)

(11) Veröffentlichungsnummer : **0 151 405**
**B1**

(12) **EUROPÄISCHE PATENTSCHRIFT**

(45) Veröffentlichungstag der Patentschrift :
12.11.86

(51) Int. Cl.⁴ : **B 62 D 35/00**

(21) Anmeldenummer : 85100368.1

(22) Anmeldetag : 16.01.85

(54) Spoiler Für Kraftfahrzeuge.

(30) Priorität : 31.01.84 DE 3403158

(43) Veröffentlichungstag der Anmeldung :
14.08.85 Patentblatt 85/33

(45) Bekanntmachung des Hinweises auf die Patenterteilung : 12.11.86 Patentblatt 86/46

(84) Benannte Vertragsstaaten :
DE FR GB IT SE

(56) Entgegenhaltungen :
DE-A- 2 555 006
DE-A- 3 240 492
FR-A- 2 454 948
US-A- 4 339 145

(73) Patentinhaber : BAYERISCHE MOTOREN WERKE Aktiengesellschaft
Postfach 40 02 40 Petuelring 130
D-8000 München 40 (DE)

(72) Erfinder : Merz, Ewald, Dipl. -Ing.
Deganoweg 10
D-8184 Gmund (DE)
Erfinder : Grubert, Hans-Walter
Ludwig-Thoma-Strasse 19
D-8031 Seefeld (DE)
Erfinder : Rennen, Manfred
Elsterweg 5
D-8070 Ingolstadt (DE)

(74) Vertreter : Dexheimer, Rolf
Bayerische Motoren Werke Aktiengesellschaft Postfach 40 02 40 Petuelring 130 - AJ-21
D-8000 München 40 (DE)

EP 0 151 405 B1

## Beschreibung

Die Erfindung bezieht sich auf einen Spoiler für Kraftfahrzeuge nach bem Oberbegriff des Hauptanspruchs.

Ein solcher Spoiler geht aus der Druckschrift DE-A-2 555 006 hervor. Hier weist der aus Kunststoff hergestellte Grundkörper an seiner unteren Seite einen Träger auf, mit dem der Spoiler am Kraftfahrzeug befestigt ist. Der Grundkörper wird durch eine Ummantelung aus weichem Werkstoff verblendet. Der Grundkörper und die Verblendung bestehen aus unterschiedlichen Materialien.

Zwar läßt sich der Spoiler in der Wagenfarbe lackieren, jedoch zeigt der Lack auf dem Spoiler aufgrund des unterschiedlichem Trägermaterials ein anderes Alterungsverhalten auf als der Lack auf dem Fahrzeugblech. Dadurch ergeben sich allmählich Farbtonänderungen zwischen Spoiler und Kraftfahrzeug.

Bei einem weiteren bekannten Spoiler (DE-U-79 122 644) ist der Grundkörper aus relativ weichem Polyurethanschaum hergestellt. Dadurch bilden sich die Befestigungsstellen an seiner Sichtseite ab, so daß die gesamte Oberfläche der als Luftleitfläche dienenden Sichtseite unregelmäßige Verformungen aufweist. Diese Verformungen werden um so deutlicher, je breiter — in Fahrzeuglängsrichtung gesehen — die Luftleitfläche ausgelegt ist. Eine möglichst breite Luftleitfläche wiederum erfordern die aerodynamischen Gesetzmäßigkeiten.

Aufgabe der Erfindung ist es, einen Spoiler so zu gestalten, daß sich seine Befestigungsstellen nicht an der Sichtseite abbilden und daß die Sichtfläche sich in der gleichen Weise lackieren läßt wie die übrige Fahrzeugkarosserie, ohne daß aufgrund des unterschiedlichen Farbträgers im Laufe der Zeit Farbunterschiede gegenüber angrenzenden Karosserieflächen auftreten.

Die Aufgabe wird erfindungsgemäß dadurch gelöst, daß die Blende als getrenntes Bauteil lösbar am Spoiler befestigt ist. Weitere vorteilhafte Ausgestaltungen der Erfindung ergeben sich aus den abhängigen Ansprüchen.

Im einfachsten Falle wählt man hierfür ein Blechteil, das sich in gleicher Weise lackieren läßt wie die übrige Fahrzeugkarosserie. Soll die Blende die Fahrzeugfarbe aufweisen, so ist es vorteilhaft, sie im unmontierten Zustand zusammen mit der Fahrzeugkarosserie zu lackieren.

Der Grundkörper kann getrennt von der Blende in einer anderen Werkstatt hergestellt werden. Er muß nicht, im Falle eines lackierten Spoilers, der Fahrzeugfarbe angepaßt werden, so daß er insgesamt für alle Fahrzeuge eines Typs oder mehrerer Typen in einer einzigen Ausführung hergestellt werden kann. Dadurch ermäßigen sich die Kosten seiner Herstellung.

Wird der Spoiler in der herkömmlichen Weise befestigt, also über eine im Grundkörper eingelegte Armierung, so sind bei dem erfindungsgemäßen Spoiler die Verformungen an den Befestigungsbereichen nicht erkennbar, da sie mit der Blende verdeckt werden. Wird jedoch, wie eine weitere Ausführung der Erfindung zeigt, die Befestigung über die Blende vorgenommen, so ist es erforderlich, die Blende genügend steif auszulegen, so daß auch an ihr keine sichtbaren Verformungen auftreten können.

Je nach Dimensionierung der Blende kann sie den Grundkörper auf der Sichtseite vollständig überdecken. Aus stilistischen Gründen kann sie aber auch in den Grundkörper eingelassen sein. In diesem Fall sollte sie an der Sichtseite bündig mit dem Grundkörper abschließen, um Luftwirbel zu vermeiden. Am Rande sei noch angemerkt, daß die Blende selbstverständlich nicht in der Fahrzeugfarbe, sondern in jeder beliebigen, möglicherweise einen optischen Effekt auslösenden Farbe lackiert sein kann.

Die Blende wird im einfachsten Fall durch Aufclipsen am Grundkörper befestigt. Sollte dies nicht ausreichen, kann sie noch zusätzlich oder ausschließlich mit einer im Grundkörper versehenen Armierung verbunden werden. In einer für die Montage des Spoilers vorzugsweisen Ausführung wird zunächst die Blende mit der Armierung verschraubt, sodann der gesamte Spoiler über die Blende am Kraftfahrzeug befestigt. Zu diesem Zweck weist die Blende nach unten gerichtete höckerartige Gewindefortsätze auf, in die entsprechende Befestigungsschrauben von der Fahrzeugseite her eingreifen. Aus Steifigkeitsgründen können die Höcker auch leistenartig miteinander verbunden sein.

Nachfolgend werden drei bevorzugte Ausführungsbeispiele erläutert und in der dazugehörigen Zeichnung näher dargestellt. Die Zeichnung zeigt in

Figur 1 einen erfindungsgemäßen Spoiler mit aufgeclipster Blende,

Figur 2 eine zweite Ausführungsart eines erfindungsgemäßen Spoilers, bei dem die Blende an der Armierung befestigt ist und

Figur 3 ein ähnliches Asuführungsbeispiel wie in Fig. 1, jedoch mit verschraubter Blende.

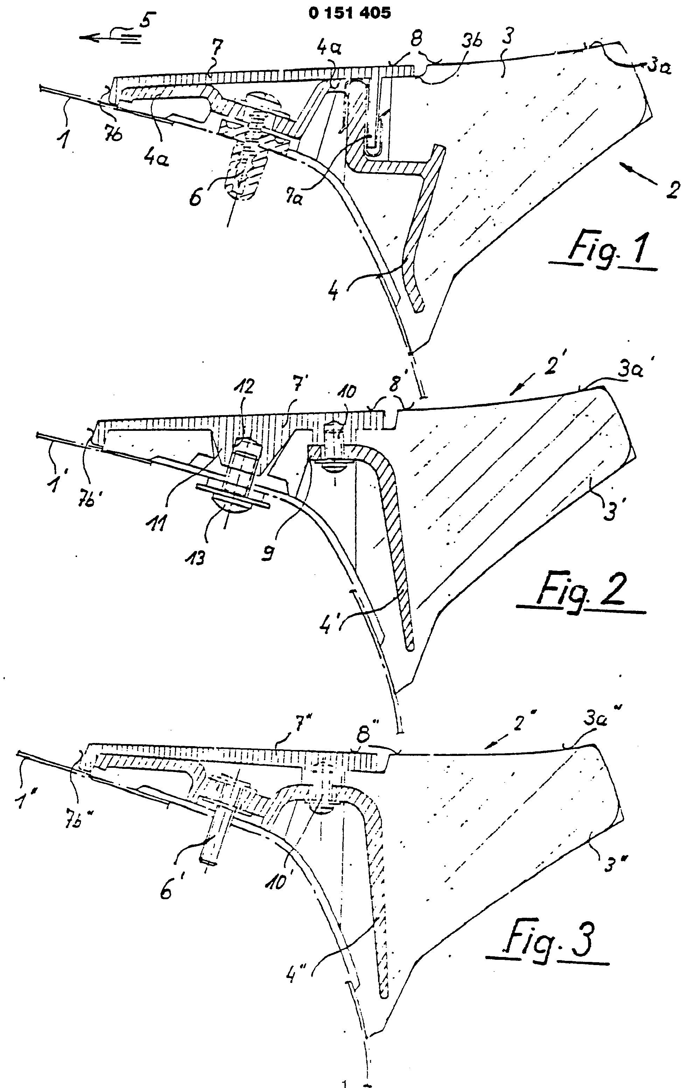

In Fig. 1 ist mit 1 die angedeutete Kontur der Kofferraumklappe eines Kraftfahrzeuges erkennbar. An deren sich noch unten abbiegenden Abschnitt sitzt ein Spoiler 2, der einen Grundkörper 3 aus geschäumten Kunststoff auf Polyrethanbasis aufweist. In den Grundkörper 3 ist teilweise eine Armierung 4 eingeschäumt. Dabei liegt die Armierung 4 im vorderen Abschnitt des Grundkörpers 3 frei. Mit vorderem Abschnitt ist der in Fahrtrichtung zeigende Abschnitt gemeint, die Fahrtrichtung selbst ist durch den Pfeil 5 dargestellt.

Die Armierung ist mit ihrem freiliegenden Abschnitt über eine Schraubverbindung 6 am Kofferraumdeckel befestigt. Der Spoiler 2 ist dadurch insgesamt an dieser Stelle festgelegt. Die Armierung 4 bildet mit ihrem freiliegenden Abschnitt einen Sitz 4a für eine Blende 7 aus lackiertem Blech. Die Blende 7 liegt außerdem in einer Vertiefung 3b des Grundkörpers 3 und schließt an der Sichtseite bundig mit dessen Oberfläche 3a ab. Dadurch entsteht eine durchgehende Luftleitfläche 8.

Die Blende 7 ist auf den Spoiler aufgeclipst und weist zu diesem Zweck nach unten weisende Zapfen 7a auf. Dabei kann die Blende mehrere solcher Zapfen 7a aufweisen, in der Fig. 1 ist nur einer sichtbar. Er greift in einen Zwischenraum, der einerseits vom Grundkörper 3 und andererseits von einem nach oben strebenden Flansch der Armierung 4 gebildet ist. Der Zapfen 7a und der Zwischenraum sind als Schnappverbindung ausgebildet. In der Zeichnung ist die Schnappverbindung nur schematisch dargestellt, da sie auf vielfältige, dem Fachmann geläufige Weise ausgeführt sein kann. An ihrem vorderen Ende weist die Blende 7 einen nach unten abgewinkelten Flansch 7b auf, mit dem sie den Armierungsabschnitt 4a überdeckt.

Das Anbringen eines solchen Spoilers auf der Heckklappe versteht sich von selbst.

In den nachfolgenden Fig. 2 und 3 werden bei den Ausführungsbeispielen nur die für ihre Charakterisierung notwendigen Teile beschrieben. Soweit die anderen Teile mit Bezugsziffern belegt sind, aber in der Beschreibung nicht erscheinen, entsprechen sie sinngemäß den Teilen in Fig. 1.

Bei dem Spoiler nach Fig. 2, hier mit 2' bezeichnet, ist wiederum in den Grundkörper 3' eine Armierung 4' eingeschäumt. Allerdings hat hier die Armierung 4' wesentlich kleinere Ausmaße. Sie weist einen abgewinkelten nach vorn gerichteten Flansch 9 auf, an dem eine Blende 7' über eine Schraubbindung 10 befestestigt ist. Die Blende 7' selbst ist neben den Befestigungsstellen für die Armierung weitere Gewindelöchern 12 versehên. In Fig. 2 ist wiederum nur einer dieser Fortsätze 11 erkennbar. In sein Gewindeloch 12 greift eine von unten durch die Kofferraumklappe 1' gesteckte Schraube 13.

Bei der Montage des Spoilers 2' wird zunächst die Blende 7' am Grundkörper 3' über die Schraubverbindung 10 befestigt. Sodann wird der komplette Spoiler 2' über die Blende 7' am Kofferraumdeckel von unten festgeschraubt.

Es ist leicht einsehbar, daß die Ausführungen nach Fig. 1 und Fig. 2 kombiniert werden können. Eine solche Kombination zeigt Fig. 3. Hier weist die Armierung 4" des Spoilers 3" einen Schraubenbolzen 6' auf, der durch die Kofferraumklappe 1" ragt und beim Befestigen mit einer von unten aufgesetzten, nicht gezeichneten Mutter versehen wird. Die Blende 7" ist wiederum wie in Fig. 2 über eine Schraubverbindung 10' an der Armierung 4" befestigt.

**Patentansprüche**

1. Spoiler für Kraftfahrzeuge, der an einem Heckabschnitt des Fahrzeuges befestigbar ist und einen Grundkörper (3') aus Kunststoff aufweist, wobei die als Luftleitfläche (8, 8', 8") dienende Sichtfläche des Spoilers (2, 2', 2") durch eine Blende (7, 7', 7") gebildet wird, dadurch gekennzeichnet, daß die Blende (7, 7', 7") als getrenntes Bauteil lösbar am Spoiler (2, 2', 2") befestigt ist.

2. Spoiler nach Anspruch 1, dadurch gekennzeichnet, daß die Blende (7, 7") aufclips- oder festschraubbar ist.

3. Spoiler nach Anspruch 1 oder 2, dadurch gekennzeichnet, daß die Blende (7') an einer im Grundkörper (3') eingebetteten Armierung (4') befestigbar ist.

4. Spoiler nach Anspruch 3, dadurch gekennzeichnet, daß er über die Armierung (4, 4") am Fahrzeugheck (1, 1") festlegbar ist.

5. Spoiler nach einem der Ansprüche 1-3, dadurch gekennzeichnet, daß der Spoiler (2') durch die Blende (7') am Fahrzeugheck (1') befestigbar ist.

6. Spoiler nach einem der Ansprüche 1-5, dadurch gekennzeichnet, daß die Blende (7, 7') aus Blech besteht.

## Claims

1. A spoiler for motor vehicles which is securable to a tail section of the vehicle and which comprises a main body (3') of synthetic plastics material, wherein the visible surface of the spoiler (2, 2', 2") serving as an air-guide surface (8, 8', 8") takes the form of a shield (7, 7', 7"), characterised in that the shield (7, 7', 7") is secured detachably to the spoiler (2, 2', 2") as a separate component.

2. A spoiler according to Claim 1, characterised in that the shield (7, 7") can be clipped on or be secured fast by screws or bolts.

3. A spoiler according to Claim 1 or 2, characterised in that the shield (7') can be secured to a reinforcement (4') embedded in the main body (3').

4. A spoiler according to Claim 3, characterised in that it can be made fast to the vehicle tail through the reinforcement (4, 4").

5. A spoiler according to any one of Claims 1-3, characterised in that the spoiler (2') is securable to the vehicle tail (1') by the shield (7').

6. A spoiler according to any one of Claims 1-5, characterised in that the shield (7, 7') is made of sheet metal.

## Revendications

1. Spoiler pour véhicule automobile qui est susceptible d'être fixé à une partie arrière du véhicule et qui comporte une structure de base (3') en matière plastique, la surface visible du spoiler (2, 2', 2") jouant le rôle de surface stabilisatrice (8, 8', 8") étant constituée par un panneau (7, 7', 7"), spoiler caractérisé en ce que le panneau (7, 7', 7") est fixé de façon amovible sur le spoiler (2, 2', 2") sous la forme d'une partie constitutive distincte.

2. Spoiler selon la revendication 1, caractérisé en ce que le panneau (7, 7") est susceptible d'être clipsé ou vissé.

3. Spoiler selon la revendication 1 ou 2, caractérisé en ce que le panneau (7') est susceptible d'être fixé sur une armature (4') enrobée dans la structure de base (3').

4. Spoiler selon la revendication 3, caractérisé en ce qu'il est susceptible d'être fixé sur l'arrière (1, 1") du véhicule par l'intermédiaire de l'armature (4, 4").

5. Spoiler selon une des revendications 1 à 3, caractérisé en ce que ce spoiler (2') est susceptible d'être fixé sur l'arrière (1') du véhicule par l'intermédiaire du panneau (7').

6. Spoiler selon une des revendications 1 à 5, caractérisé en ce que le panneau (7, 7') est en tôle.

_Fig. 1_

_Fig. 2_

_Fig. 3_